# EUROPEAN PATENT APPLICATION

(11) **EP 4 147 968 A1**
(43) Date of publication of application: **15.03.2023**
(21) Application number: 22195337.5
(22) Date of filing: 13.09.2022
(51) Int. Cl.: B64C 3/20

(54) **COMPOSITE STRUCTURE AND METHOD FOR FORMING SAME**

(30) Priority: 13.09.2021 US 202117473324
(71) Applicant: Rohr, Inc., Chula Vista, CA 91910-2098 (US)
(72) Inventor: WARD, Stephen H., Chula Vista, 91910 (US); DION, Stephane, Coronado, 92118 (US)
(74) Representative: Dehns

(57) **Abstract**

A composite structure (20) includes a first composite skin (22) and a second composite skin (24) defining a longitudinal cavity (26) therebetween. The first composite skin (22) and the second composite skin (24) further define at least one edge (30,34) where the first composite skin (22) contacts the second composite skin (24). The composite structure (20) further includes at least one core (46) disposed within the longitudinal cavity (26). The core includes a first surface (56) and a second surface (58) which define a core edge (76) where the first surface (56) contacts the second surface (58). The core (46) is positioned with the core edge (76) adjacent the at least one edge (30,34) with the first surface (56) contacting the first composite skin (22) and the second surface (58) contacting the second composite skin (24).

## Description

### BACKGROUND

### 1. Technical Field

This disclosure (invention) relates generally to composite structures, and more particularly to composite structures for aircraft and methods for forming composite structures for aircraft.

### 2. Background Information

Composite materials are frequently used in the aerospace industry for a diverse array of structural and dynamic aerostructural applications because of the strength-to-weight advantage provided by composite materials. Various types of molding techniques may be used to construct composite structures or components for an aircraft. For example, resin pressure molding (RPM) techniques and Same Qualified Resin Transfer Molding (SQRTM) techniques may be used to form composite structures for aerospace applications. However, composite structures formed by certain molding techniques may require component thicknesses to be greater than desired in order to prevent or reduce the likelihood of skin buckling, thereby increasing component weight. Accordingly, what is needed are improved composite structures and methods of forming composite structures which address the above-noted concern.

### SUMMARY

It should be understood that any or all of the features or embodiments described herein can be used or combined in any combination with each and every other feature or embodiment described herein unless expressly noted otherwise.

According to an aspect of the present invention, a composite structure includes a first composite skin and a second composite skin defining a longitudinal cavity therebetween. The first composite skin and the second composite skin further define at least one edge where the first composite skin contacts the second composite skin. The composite structure further includes at least one core disposed within the longitudinal cavity. The core includes a first surface and a second surface which define a core edge where the first surface contacts the second surface. The core is positioned with the core edge adjacent the at least one edge with the first surface contacting the first composite skin and the second surface contacting the second composite skin.

Optionally, the at least one core may include an interior portion including a honeycomb structure including a plurality of cavities defined by a plurality of side walls extending between the first surface and the second surface and an exterior portion surrounding the honeycomb structure portion and defining the first surface and the second surface.

Optionally, the at least one core may include a foam material.

Optionally, the composite structure may include a plurality of spars located in the longitudinal cavity and laterally spaced from one another. The plurality of spars may extend between and connect the first composite skin and the second composite skin.

Optionally, the at least one core may be disposed in a sub-cavity defined between the at least one edge and an adjacent spar of the plurality of spars.

Optionally, the core may include a third surface extending between the first surface and the second surface. The third surface may contact the adjacent spar.

Optionally, the first composite skin and the second composite skin may extend between a first longitudinal end and a second longitudinal end opposite the first longitudinal end.

Optionally, the at least one core may extend a portion of a distance from the first longitudinal end to the second longitudinal end.

Optionally, the at least one core may extend substantially an entire distance from the first longitudinal end to the second longitudinal end.

Optionally, the at least one core may be tapered such that one or both of a width and a height of the at least one core changes in a direction from a first longitudinal side of the at least one core to a second longitudinal side of the at least one core opposite the first longitudinal side.

Optionally, the first composite skin and the second composite skin may form a unitary composite skin.

According to another aspect of the present invention, a method for forming a composite structure includes positioning a first composite skin and a second composite skin so that the first composite skin and the second composite skin define a longitudinal cavity therebetween and at least one edge where the first composite skin contacts the second composite skin, curing the first composite skin and the second composite skin, and inserting a core into the longitudinal cavity so that the core is positioned with a first surface of the core contacting the first composite skin, a second surface of the core contacting the second composite skin, and a core edge of the core adjacent the at least one edge. The core edge is defined where the first surface contacts the second surface.

Optionally, the step of positioning the first composite skin and the second composite skin may include positioning a plurality of spars so that the plurality of spars are located in the longitudinal cavity and laterally spaced from one another with the plurality of spars extending between and connecting the first composite skin and the second composite skin. The step of curing the first composite skin and the second composite skin may include curing the plurality of spars.

Optionally, the core may be disposed in a sub-cavity defined between the at least one edge and an adjacent spar of the plurality of spars.

Optionally, the core may include a third surface extending between the first surface and the second surface and the step of inserting the core into the longitudinal cavity may include positioning the third surface in contact with the adjacent spar.

Optionally, the method may further include inserting at least one mandrel into the longitudinal cavity, prior to the step of curing the first composite skin and the second composite skin.

Optionally, the step of inserting the core into the longitudinal cavity may be performed subsequent to curing the first composite skin and the second composite skin.

Optionally, the method may further include applying an adhesive to at least the first surface and the second surface of the core prior to the step of inserting the core into the longitudinal cavity.

According to another aspect of the present invention, a composite structure includes a first composite skin and a second composite skin mounted to the first composite skin. The first composite skin and the second composite skin define a longitudinal cavity therebetween. The first composite skin and the second composite skin further define a first longitudinal edge where the first composite skin contacts the second composite skin at a first lateral side and a second longitudinal edge where the first composite skin contacts the second composite skin at a second lateral side opposite the first lateral side. The composite structure further includes a first core and a second core disposed within the longitudinal cavity. The first core is positioned adjacent the first longitudinal edge and contacts the first composite skin and the second composite skin and the second core is positioned adjacent the second longitudinal edge and contacts the first composite skin and the second composite skin.

Optionally, each of the first core and the second core may include a first surface and a second surface which define a core edge where the first surface contacts the second surface and the first surface is in contact with the first composite skin and the second surface is in contact with the second composite skin.

The present invention, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a perspective view of a composite structure, in accordance with one or more embodiments of the present disclosure.
FIG. 2 illustrates a perspective view of an exemplary core, in accordance with one or more embodiments of the present disclosure.
FIG. 3 illustrates a top view of the exemplary core of FIG. 2, in accordance with one or more embodiments of the present disclosure.
FIG. 4 illustrates a side view of the exemplary core of FIG. 2, in accordance with one or more embodiments of the present disclosure.
FIG. 5 illustrates a top view of an exemplary core, in accordance with one or more embodiments of the present disclosure.
FIG. 6 illustrates a side view of an exemplary core, in accordance with one or more embodiments of the present disclosure.
FIG. 7 illustrates a front view of an exemplary core, in accordance with one or more embodiments of the present disclosure.
FIG. 8 illustrates a cross-sectional view of the composite structure of FIG. 1 taken along Line 8-8 and including exemplary cores, in accordance with one or more embodiments of the present disclosure.
FIG. 9 illustrates a cross-sectional view of a portion of the composite structure shown in FIG. 8 and including an exemplary core, in accordance with one or more embodiments of the present disclosure.
FIG. 10 illustrates a flowchart of a method for forming a composite structure, in accordance with one or more embodiments of the present disclosure.
FIG. 11 illustrates a composite structure having exemplary mandrels at various stages of insertion therein, in accordance with one or more embodiments of the present disclosure.
FIG. 12 illustrates the composite structure of FIG. 1 with a core being inserted therein, in accordance with one or more embodiments of the present disclosure.

### DETAILED DESCRIPTION

In accordance with various aspects of the present disclosure, apparatuses, systems, and methods are described in connection with a component of, for example, an aircraft. In some embodiments, the component may be a composite structure such as, but not limited to, an aircraft control structure, an airfoil, or a wing of an aircraft. In some embodiments, a composite structure of the present disclosure may for all or a portion of a stabilizer or a stabilator of an aircraft. However, it should be understood that the composite structures of the present disclosure are not limited to utilization in an aircraft or for aerospace applications and may alternatively be used for other applications.

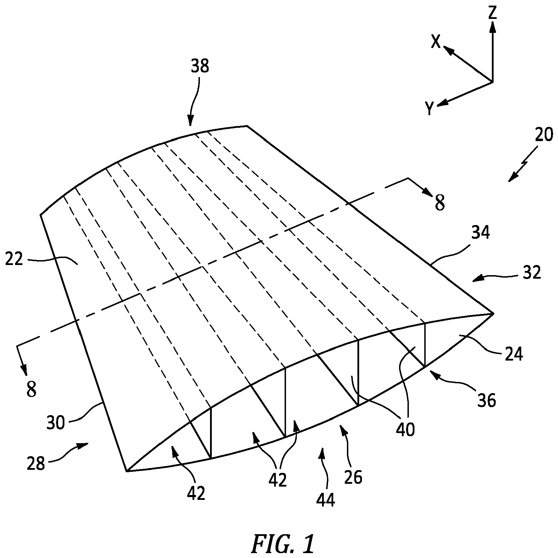

Referring to FIG. 1, a perspective view of a composite structure 20 is illustrated. The composite structure 20 includes at least one composite skin, for example, a first composite skin 22 and a second composite skin 24, as shown in FIG. 1. The composite structure 20 of the present disclosure is not limited to any particular number of composite skins. The first composite skin 22 is spaced from the second composite skin 24 so as to define a cavity 26 therebetween. As shown in FIG. 1, the cavity 26 may extend longitudinally within the composite structure 20. In some embodiments, the first composite skin 22 and the second composite skin 24 may contact or be fixedly mounted to one another. As shown in FIG. 1, the first composite skin 22 and the second composite skin 24 are mounted to one another at a first lateral end 28 of the composite structure 20 to define a first edge 30 where the first composite skin 22 contacts the second composite skin 24. Similarly, the first composite skin 22 and the second composite skin 24 are mounted to one another at a second lateral end 32 of the composite structure 20, opposite the first lateral end 28, to define a second edge 34 wherein the first composite skin 22 contacts the second composite skin 24. The first composite skin 22 and the second composite skin 24 may extend between a first longitudinal end 36 and a second longitudinal end 38 opposite the first longitudinal end 36. In some embodiments, the first edge 30 and the second edge 32 may extend all or substantially all of a longitudinal distance from the first longitudinal end 36 to the second longitudinal end 38. In some embodiments the first composite skin 22 and the second composite skin 24 may define a unitary composite skin. The term "unitary" as used herein with respect to the first composite skin 22 and the second composite skin 24 means a single component, wherein the first composite skin 22 and the second composite skin 24 are an inseparable body (e.g., formed of a single material).

The configuration of the composite structure 20 is discussed above to assist in the description of the present disclosure. It should be understood, however, that composite structures may have a variety of different shapes, forms, and configurations and the present disclosure is not limited to the particular exemplary configuration of the composite structure 20 described above. As used herein, the terms "longitudinal," "lateral," and "vertical" may be used to refer to the respective x-axis, y-axis, and z-axis as shown, for example, in FIG. 1 and should not be understood to refer to any orientation or attitude of the composite structure 20 (e.g., in use on an aircraft).

In some embodiments, the composite structure 20 may include a plurality of spars 40 located in the cavity 26 and laterally spaced from one another within the cavity 26. Each spar of the plurality of spars 40 extends between and connects the first composite skin 22 and the second composite skin 24 in order to provide structural support for the composite structure 20. As shown in FIG. 1, the plurality of spars 40 may extend in a substantially longitudinal direction along all or a portion of a longitudinal distance between the first longitudinal end 36 and the second longitudinal end 38. Each adjacent pair of spars of the plurality of spars 40 may define a sub-cavity 42 therebetween. Sub-cavities 42 may additionally be defined, for example, between a spar of the plurality of spars 40 and adjacent portions of the first composite skin 22 and/or the second composite skin 24. As shown in FIG. 1, the sub-cavities 42 may extend in a substantially longitudinal direction between the first longitudinal end 36 and the second longitudinal end 38. In some embodiments, the plurality of spars 40 may be made from a composite material which may be similar to a composite material used to form the first composite skin 22 and the second composite skin. In some other embodiments, the plurality of spars 40 may alternatively be formed from another material such as a metal, polymer, ceramic, or other suitable material which may preferably be lightweight and provide sufficient structural strength to the composite structure 20. In some embodiments, the composite structure 20 may not include the plurality of spars 40 and the present disclosure is not limited to composite structures including spars.

The composite structure 20 may include at least one opening 44 between the cavity 26 and an exterior of the composite structure 20. For example, the first composite skin 22 and the second composite skin 24 may define the opening 44 therebetween at one or both of the first longitudinal end 36, as shown in FIG. 1, and the second longitudinal end 38. Accordingly, the opening 44 may allow access to the cavity 26 and/or one or more sub-cavities 42 from the exterior of the composite structure 20 as shown, for example, in FIG. 1.

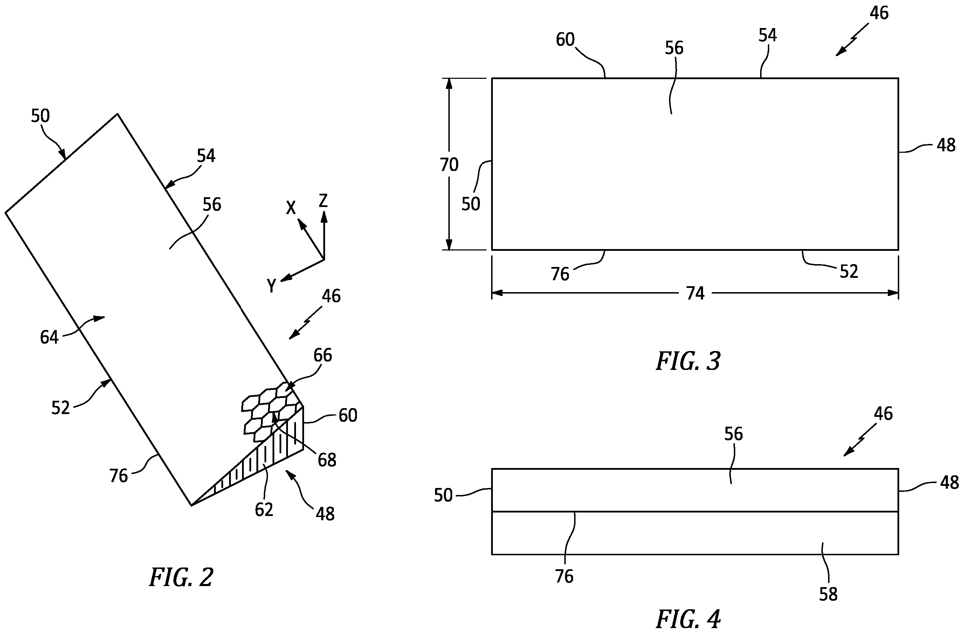

Referring to FIGS. 1-4, the composite structure 20 includes at least one core 46 configured to provide further support to the composite structure 20 and/or to prevent buckling between the first composite skin 22 and the second composite skin 24. As shown in FIG. 2, the at least one core 46 may include a first longitudinal side 48 and a second longitudinal side 50 opposite the first longitudinal side 48. The at least one core 46 may include a first lateral side 52 and a second lateral side 54 opposite the first lateral side 52. Each of the first lateral side 52 and the second lateral side 54 may extend between the first longitudinal side 48 and the second longitudinal side 50. The at least one core 46 may include a first surface 56 and a second surface 58. Each of the first surface 56 and the second surface 58 may extend between the first longitudinal side 48 and the second longitudinal side 50 as well as the first lateral side 52 and the second lateral side 54. The first surface 56 and the second surface 58 define a core edge 76 where the first surface 56 contacts the second surface 58. The at least one core 46 may include a third surface 60 which may extend between the first surface 56 and the second surface 58 as well as the first longitudinal side 48 and the second longitudinal side 50.

In some embodiments, the at least one core 46 may include an interior portion 62 and an exterior portion 64. The interior portion 62 may include a plurality of cells 66 defined by a corresponding plurality of walls 68 of the interior portion 62 which extend, for example, between the first surface 56 and the second surface 58. In various embodiments, each cell of the plurality of cells 66 may be configured to form a "honeycomb" structure defined by, for example, six adjacent walls of the plurality of walls 68 (see, e.g., FIG. 2). However, it should be understood that aspects of the present disclosure may be applied to cells having alternative configurations as well, such as cells having a square cross-sectional configuration or any other suitable configuration. In some embodiments, the interior portion 62 of the at least one core 46 may alternatively be made from a foam material or another suitable lightweight material which is sufficiently rigid to provide structural support for the first composite skin 22 and the second composite skin 24. The exterior portion 64 surrounds the interior portion 62 and defines the first surface 56, the second surface 58, and the third surface 60.

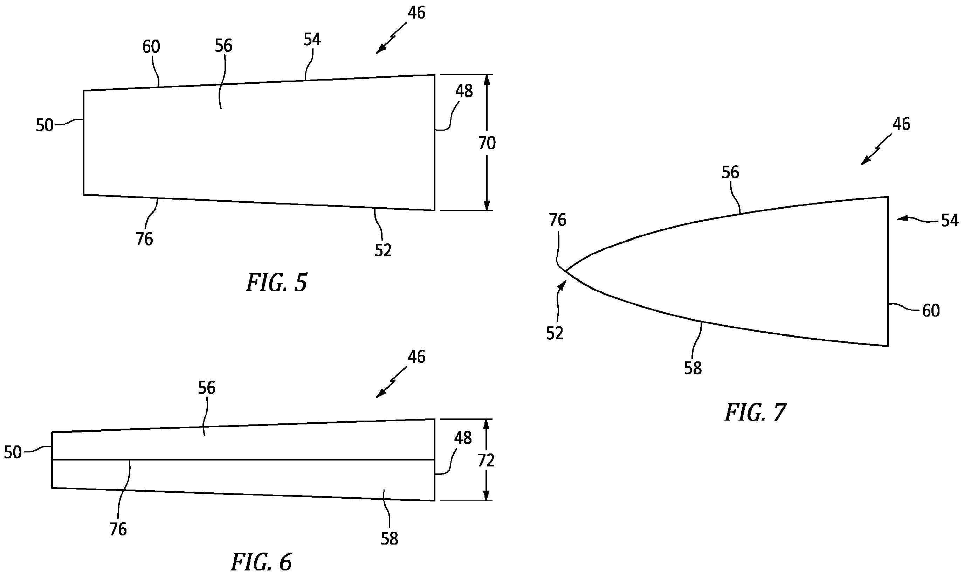

FIGS. 5-7 illustrate various embodiments of the at least one core 46. As shown in FIGS. 5 and 6, in some embodiments, the at least one core 46 may have a tapered width 70 (e.g., lateral width) and/or a tapered height 72 (e.g., vertical height) configured to correspond to a counterpart shape of the first composite skin 22, the second composite skin 24, and/or the plurality of spars 40 with which the at least one core 46 may be configured to mate, as will be discussed in further detail. For example, the at least one core 46 may be tapered such that the width 70 and/or the height of the at least one core 46 changes (e.g., decreases) in a direction from the first longitudinal side 48 to the second longitudinal side 50. In some other embodiments, the width 70 and/or the height 72 of the at least one core 46 may be substantially constant between the first longitudinal side 48 and the second longitudinal side 50 (see, e.g., FIGS. 3 and 4). As shown in FIG 7, in some embodiments, one or both of the first surface 56 and the second surface 58 may be curved, for example, in a direction extending from the first lateral side 52 to the second lateral side 54. The configurations of the at least one core 46 in FIGS. 2-7 provide examples of how the at least one core 46 may be configured to conform to and properly fit within and provide structural support to the composite structure 20 and the present disclosure is not limited to the particular configurations of the at least one core 46 shown in FIGS. 2-7 and described above.

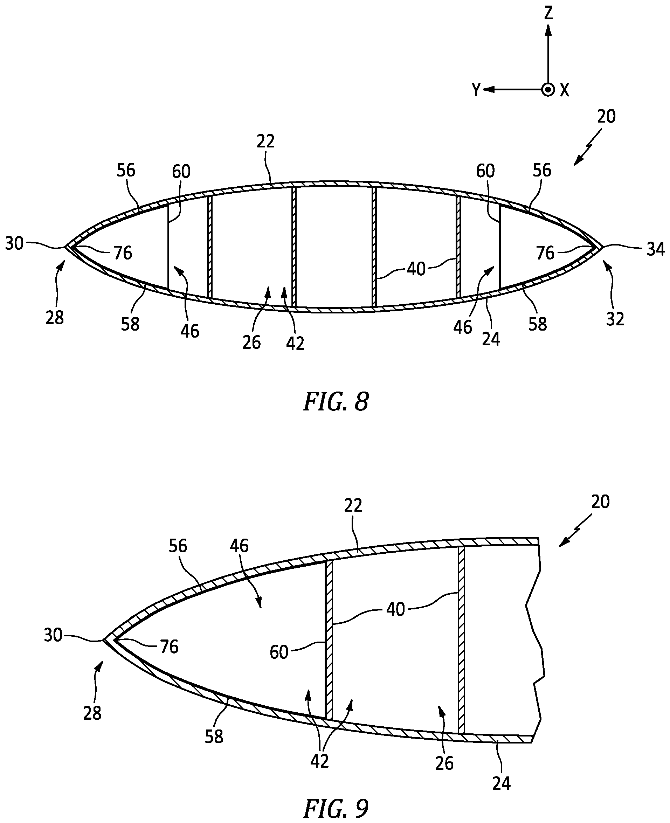

Referring to FIGS. 1-9, the at least one core 46 is located within the cavity 26 and positioned so that the core edge 76 is positioned adjacent one or both of the respective first edge 30 and second edge 34 with the first surface 56 contacting the first composite skin 22 and the second surface 58 contacting the second composite skin 24. FIGS. 8 and 9 illustrate cross-sectional views of the composite structure 20 including exemplary cores of the at least one core 46 positioned therein and the present disclosure is not limited to the particular configurations of the at least one core 46 shown in FIGS. 8 and 9. In some embodiments, the at least one core 46 may be disposed in the sub-cavity 42 defined between one of first edge 30 or the second edge 32 and an adjacent (e.g., laterally adjacent) spar of the plurality of spars 40 as shown, for example, in FIGS. 8 and 9. In some embodiments, the third surface 60 of the at least one core 46 may be spaced (e.g., laterally spaced) from the adjacent spar of the plurality of spars 40 (see, e.g., FIG. 8). In some other embodiments, the third surface 60 of the at least one core 46 may be mounted to or may otherwise contact the adjacent spar of the plurality of spars 40 (see, e.g., FIG. 9). In some embodiments, the at least one core 46 may have a length 74 such that the at least one core 46 extends a portion of a distance from the first longitudinal end 36 to the second longitudinal end 38. In some other embodiments, the length 74 of the at least one core 46 may be such that the at least one core 46 extends substantially an entire distance (e.g., greater than 95% of a distance) from the first longitudinal end 36 to the second longitudinal end 38.

Referring to FIGS. 1, 8, and 9, in some embodiments, the composite structure 20 may have a change in shape, lateral width, vertical height, curvature, etc. along the extent of the composite structure 20 such as, for example, from the first longitudinal end 36 toward the second longitudinal end 38 and/or from the first lateral end 28 toward the second lateral end 32. For example, in some embodiments, the cavity 26 and/or one or more of the sub-cavities 42 within the composite structure 20 may be tapered such that a cross-sectional area (e.g., along a y-z plane, as shown in FIG. 8) of the cavity 26 and/or one or more of the sub-cavities 42 decreases in a taper direction extending from the opening 44 (e.g., at the first longitudinal end 36) toward an opposing end of the one or more of the sub-cavities 42 (e.g., at the second longitudinal end 38). The tapering of the cavity 26 and/or one or more of the sub-cavities 42 may be the result of, for example, a convergence of the first composite skin 22 with the second composite skin 24 and/or one or more spars of the plurality of spars 40 as shown, for example, in FIG. 1.

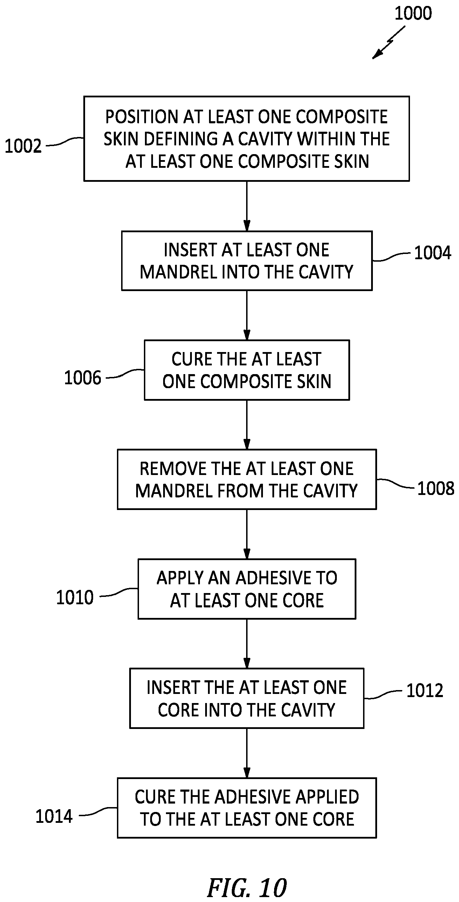

Referring to FIGS. 8-12, the present disclosure includes a method 1000 for forming a composite structure, such as the composite structure 20, as shown in the flow charted illustrated in FIG. 10. Unless otherwise noted herein, it should be understood that the steps of method 1000 are not required to be performed in the sequence in which they are discussed below and steps of the method 1000 may be performed separately or simultaneously.

Step 1002 includes positioning the at least one composite skin and/or the plurality of spars 40 relative to one another in preparation for forming the composite structure 20, as described above. For example, step 1002 may include positioning the first composite skin 22, the second composite skin 24, and the plurality of spars 40 so that the second composite skin 24 is spaced from the first composite skin 22 and the first composite skin 22 and the second composite skin 24 define the cavity 26 therebetween, and so that the plurality of spars 40 may be located in the cavity 26 and laterally spaced from one another with the plurality of spars 40 extending between and connecting the first composite skin 22 and the second composite skin 24.

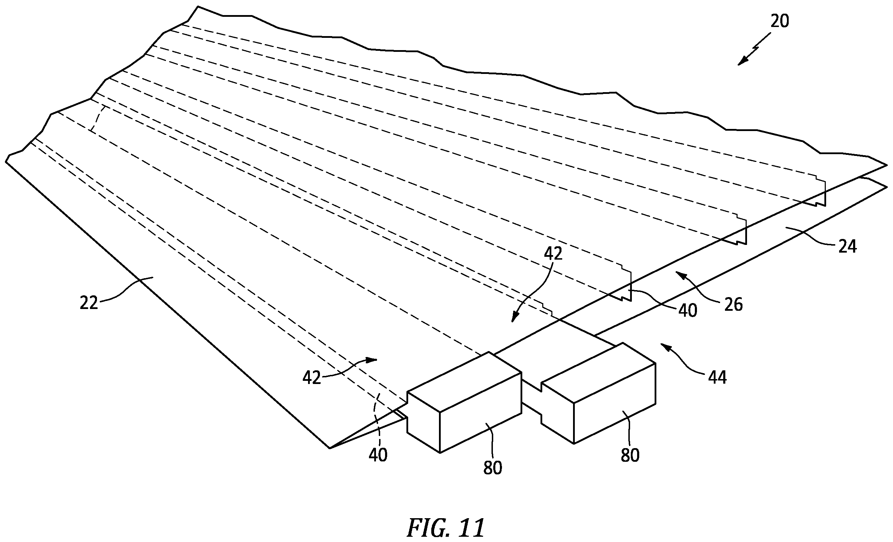

In some embodiments, the method 1000 may optionally include inserting at least one mandrel 80 into the cavity 26 and/or one or more of the sub-cavities 42 defined by the plurality of spars 40, as provided in step 1004 and shown in FIG. 11. The at least one mandrel 80 may be used to support the composite skins 22, 24 and the plurality of spars 40 during assembly and/or during a subsequent curing process. The at least one mandrel 80 may be inserted through the opening 44 and may extend through all or a substantial portion of a length of a respective sub-cavity 42. In some embodiments, positioning the composite skins 22, 24 and the plurality of spars 40 may additionally include the use of other internal and/or external tooling elements to support and maintain the position of the at least one composite skin and the plurality of spars 40.

Step 1006 includes curing the composite skins 22, 24 and the plurality of spars 40. In some embodiments, the composite skins 22, 24 and the plurality of spars 40 may be co-cured (e.g., cured simultaneously) to form the composite structure 20. Curing the composite skins 22, 24 and the plurality of spars 40 may include heating the assembled composite skins 22, 24 and the plurality of spars 40 to an elevated temperature and holding the composite skins 22, 24 and the plurality of spars 40 at the elevated temperature for a sufficient time to cure the composite skins 22, 24 and the plurality of spars 40. Various temperatures, pressure, and curing times may be used, depending on the materials selected for the composite skins 22, 24 and the plurality of spars 40. The composite skins 22, 24 and the plurality of spars 40 may be cured, for example, in an oven or autoclave. The present disclosure is not limited to any particular curing temperatures, pressures, curing times, or equipment. In the cured state, the composite skins 22, 24 and the plurality of spars 40 form the composite structure 20.

In some embodiments, for example, where at least one mandrel 80 has been used to support the composite structure 20, the method 1000 may include removing the at least one mandrel 80 from the sub-cavities 42 of the composite structure 20 once the composite structure 20 has sufficiently cooled and solidified, as provided in step 1008.

In some embodiments, the steps 1002, 1004, 1006, and 1008 of method 1000 may be performed during application a composite molding process. Various types of molding techniques may be used to construct composite components of an aircraft. For example, a resin pressure molding (RPM) technique or a Same Qualified Resin Transfer Molding (SQRTM) technique may combine pre-preg processing and liquid molding to produce composite components targeted to aerospace applications. As part of these techniques, pre-preg plies may be arranged within a mold, the mold may be closed, and then a resin may be injected into the mold. The resin maintains hydrostatic pressure within the mold. The present disclosure, however, is not limited to any particular composite formation technique or process for forming the composite structure 20.

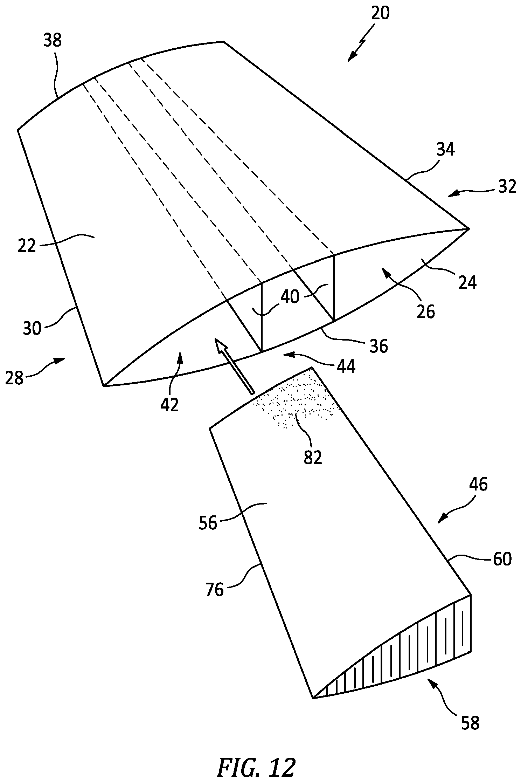

In some embodiments, the method 1000 may optionally include applying an adhesive to the at least one core 46, as provided in step 1010, prior to insertion of the at least one core 46 into the composite structure 20. As shown in FIG. 12, for example, the adhesive (schematically illustrated as adhesive 82 in FIG. 12) may be applied to all or a portion of the first surface 56, the second surface 58, and/or the third surface 60 of the at least one core 46. The adhesive 82 may be used to ensure that the at least one core 46 is securely bonded within the composite structure 20.

Step 1012 includes inserting the at least one core 46 into the cavity 26 of the composite structure 20 and positioning the at least one core 46 within the composite structure 20 as described above. For example, step 1012 may include inserting the at least one core 46 into the cavity 26 so that the at least one core 46 is mounted to or otherwise in contact with one or more of the first composite skin 22, the second composite skin 24, and an adjacent spar of the plurality of spars 40. Insertion of the at least one core 46 into the composite structure 20 may be performed subsequent to curing the composite skins 22, 24 and the plurality of spars 40. In some embodiments, such as with embodiments of the composite structure 20 which have one or more tapered sub-cavities 42, as described above, the at least one core 46 may be inserted into a respective sub-cavity 42 in the taper direction (e.g., a direction extending from the opening 44 toward an opposing end of the respective sub-cavity 42) in which the cross-sectional area of the respective sub-cavity 42 decreases, until the at least one core 46 is tightly fitted within the respective sub-cavity 42 and in contact with one or more of the first composite skin 22, the second composite skin 24, and the adjacent spar of the plurality of spars 40.

In some embodiments, the method 1000 may optionally include curing the adhesive applied to the at least one core 46, as provided in step 1014, subsequent to insertion of the at least one core 46 into the composite structure 20. Similar to the curing process used for the composite skins 22, 24, curing the adhesive may include heating the composite structure 20 to an elevated temperature and holding the composite structure 20 at the elevated temperature for a sufficient time to cure the adhesive. Various temperatures, pressure, and curing times may be used, depending on the particular adhesive selected. In some embodiments, the adhesive may not require the use of a curing process.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. It is further noted that various method or process steps for embodiments of the present disclosure are described in the following description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Accordingly, the present disclosure is not to be restricted except in light of the attached claims and their equivalents.

## Claims

1. A composite structure (20) comprising:
a first composite skin (22);
a second composite skin (24) mounted to the first composite skin (22), the first composite skin (22) and the second composite skin (24) defining a longitudinal cavity (26) therebetween, the first composite skin (22) and the second composite skin (24) further defining at least one edge (30,34) where the first composite skin (22) contacts the second composite skin (24); and
at least one core (46) disposed within the longitudinal cavity (26), the core (46) comprising a first surface (56) and a second surface (58) which define a core edge (76) where the first surface (56) contacts the second surface (58), the core (46) positioned with the core edge (76) adjacent the at least one edge (30,34) with the first surface (56) contacting the first composite skin (24) and the second surface (58) contacting the second composite skin (24).

2. The composite structure (20) of claim 1, wherein the at least one core (46) includes an interior portion (62) comprising a honeycomb structure comprising a plurality of cavities (66) defined by a plurality of side walls (68) extending between the first surface (56) and the second surface (58) and an exterior portion (64) surrounding the honeycomb structure portion and defining the first surface (56) and the second surface (58) or , wherein the at least one core (46) comprises a foam material.

3. The composite structure (20) of claims 1 or 2, further comprising a plurality of spars (40) located in the longitudinal cavity (26) and laterally spaced from one another, the plurality of spars (40) extending between and connecting the first composite skin (22) and the second composite skin (24).

4. The composite structure (20) of claim 4, wherein;
the at least one core (46) is disposed in a sub-cavity (42) defined between the at least one edge (30,34) and an adjacent spar (40) of the plurality of spars (40),
wherein the core (46) optionally comprises a third surface (60) extending between the first surface (56) and the second surface (58), the third surface (60) contacting the adjacent spar (40).

5. The composite structure (20) of any preceding claim, wherein the first composite skin (22) and the second composite skin (24) extend between a first longitudinal end (36) and a second longitudinal end (38) opposite the first longitudinal end (36).

6. The composite structure (20) of claim 5, wherein the at least one core (46):
extends a portion of a distance from the first longitudinal end (36) to the second longitudinal end (38), wherein the at least one core optionally extends substantially an entire distance from the first longitudinal end to the second longitudinal end.

7. The composite structure (20) of any preceding claim, wherein the at least one core (46) is tapered such that one or both of a width and a height of the at least one core (46) changes in a direction from a first longitudinal side (48) of the at least one core to a second longitudinal side (50) of the at least one core (46) opposite the first longitudinal side (48).

8. The composite structure (20) of any preceding claim, wherein the first composite skin (22) and the second skin (24) form a unitary composite skin.

9. A method (1000) for forming a composite structure (20), the method (1000) comprising:
positioning (1002) a first composite skin (22) and a second composite skin (24)so that the first composite skin (22) and the second composite skin (24) define a longitudinal cavity (26) therebetween and at least one edge (30,34) where the first composite skin (22) contacts the second composite skin (24);
curing (1006) the first composite skin (22) and the second composite skin (24); and
inserting (1012) a core into the longitudinal cavity (26) so that the core (46) is positioned with a first surface (56) of the core contacting the first composite skin (22), a second surface (58) of the core (46) contacting the second composite skin (24), and a core edge (76) of the core adjacent the at least one edge (30,34), the core edge (76) defined where the first surface (56) contacts the second surface (58).

10. The method (1000) of claim 9, wherein the step of positioning (1002) the first composite skin (22) and the second composite skin (24) includes positioning a plurality of spars (40) so that the plurality of spars (40) are located in the longitudinal cavity (26) and laterally spaced from one another with the plurality of spars (40) extending between and connecting the first composite skin (22) and the second composite skin (24); and
wherein the step of curing (1006) the first composite skin (22) and the second composite skin (24) includes curing the plurality of spars (40).

11. The method (1000) of claims 10, wherein the core (46):
is disposed in a sub-cavity (42) defined between the at least one edge (30,34) and an adjacent spar (40) of the plurality of spars (40); and/or
comprises a third surface (60) extending between the first surface (56) and the second surface (58), and wherein the step of inserting (1012) the core (46) into the longitudinal cavity (26) includes positioning the third surface (60) in contact with the adjacent spar (40).

12. The method (1000) of any of claims 9 to 11, further comprising inserting (1004) at least one mandrel into the longitudinal cavity (26), prior to the step of curing (1006) the first composite skin (22) and the second composite skin (24).

13. The method (1000) of any of claims 9 to 12, wherein the step of inserting the core (46) into the longitudinal cavity (26) is performed subsequent to curing the first composite skin (22) and the second composite skin (24).

14. The method (1000) of any of claims 9 to 13, further comprising applying (1010) an adhesive (82) to at least the first surface (56) and the second surface (58) of the core prior to the step of inserting the core into the longitudinal cavity (26).

15. A composite structure (20) comprising:
a first composite skin (22);
a second composite skin (24) mounted to the first composite skin (22), the first composite skin (22) and the second composite skin (24) defining a longitudinal cavity (26) therebetween, the first composite skin (22) and the second composite skin (24) further defining a first longitudinal edge (30) where the first composite skin (22) contacts the second composite skin (24) at a first lateral side (52) and a second longitudinal edge (34) where the first composite skin (22) contacts the second composite skin (24) at a second lateral side (54) opposite the first lateral side (52);
a first core (46) and a second core (46) disposed within the longitudinal cavity (26), the first core (46) positioned adjacent the first longitudinal edge (30) and contacting the first composite skin (22) and the second composite skin (24) and the second core (46) positioned adjacent the second longitudinal edge (34) and contacting the first composite skin (22) and the second composite skin (24); and
wherein each of the first core (46) and the second core (46) optionally comprise:
a first surface (56) and a second surface (58) which define a core edge (76) where the first surface (56) contacts the second surface (58), the first surface (56) in contact with the first composite skin (22) and the second surface (58) in contact with the second composite skin (24).
